# EUROPÄISCHE PATENTSCHRIFT

(11) **EP 3 642 118 B1**
(45) Veröffentlichungstag und Bekanntmachung des Hinweises auf die Patenterteilung: **07.04.2021**
(21) Anmeldenummer: 18731426.5
(22) Anmeldetag: 13.06.2018
(51) Int. Cl.: B65B 35/58, B65G 47/244, B65B 5/08, B65B 23/08, B65G 47/91, B25J 15/06, B25J 15/00, B65B 43/14

(54) **EIERAUSRICHTUNGSSTATION ZUR AUSRICHTUNG VON EIERN UND VORRICHTUNG ZUM TRANSPORT UND VERPACKEN VON EIERN**
EGG-ORIENTING STATION FOR ORIENTING EGGS, AND APPARATUS FOR TRANSPORTING AND PACKAGING EGGS
POSTE D'ORIENTATION D' OEUFS SERVANT À ORIENTER DES OEUFS ET DISPOSITIF DE TRANSPORT ET DE CONDITIONNEMENT D' OEUFS

(30) Priorität: 19.06.2017 DE 102017113418
(43) Veröffentlichungstag der Anmeldung: 29.04.2020
(73) Patentinhaber: Bergmeier, Gerd, 32120 Hiddenhausen (DE)
(72) Erfinder: Bergmeier, Gerd, 32120 Hiddenhausen (DE)
(74) Vertreter: Dantz, Jan Henning
(86) Internationale Anmeldenummer: PCT/EP2018/065605
(87) Internationale Veröffentlichungsnummer: WO 2018/234111

(56) Entgegenhaltungen:
- EP-A1- 2 842 877
- WO-A1-2016/129992
- GB-A- 966 330
- US-A- 3 497 052
- US-A- 4 603 772
- US-B1- 8 607 960

## Beschreibung

Die vorliegende Erfindung betrifft eine Eierausrichtungsstation zur Ausrichtung von Eiern gemäß dem Oberbegriff des Anspruchs 1 sowie eine Vorrichtung zum Transport und Verpacken von Eiern gemäß dem Oberbegriff des Anspruchs 9.

Derartige Eierausrichtungsstationen werden benötigt, um Eier in vorbestimmter Ausrichtung, sprich mit dem Eiboden nach unten oder mit der Eispitze nach unten in eine Eiaufnahme eines Förderbandes umzusetzen. Dabei ist es bekannt, die Eier je nach gewünschter Ausrichtung durch dafür vorgesehene separate Ausrichtungsstationen zu befördern, in denen die Eier in einer vorbestimmten Ausrichtung ausgerichtet werden und anschließend einem Förderband zur Weiterbehandlung zuzuführen.

Problematisch an den bekannten Eierausrichtungsstationen im Einsatz in Transport- und Verpackungsvorrichtungen für Eier ist, dass für unterschiedliche Eierverpackungen jeweils unterschiedliche Eierausrichtungsstationen eingesetzt werden müssen.

Aus der WO 2016/129992 A1 ist eine Eierausrichtungsstation bekannt, mit der Eier wahlweise mit dem Eiboden oder der Eispitze in Eiaufnahmen fallen können. Dazu werden die Eier auf mehrteilige Stützplatten mit jeweils einem zentralen und zwei lateralen Bereichen geschoben. Anschließend wird zur Ausrichtung der Eier derart, dass die Eier mit ihrer Eispitze in die Eiaufnahmen fallen, die lateralen Bereiche der Stützplatten entfernt. Zur Ausrichtung der Eier derart, dass die Eier mit ihrem Eiboden in die Eiaufnahmen fallen, die zentralen Bereiche der Stützplatten entfernt.

Aufgabe der vorliegenden Erfindung ist es, eine verbesserte Eierausrichtungsstation und eine Vorrichtung zum Transport und Verpacken von Eiern bereitzustellen, mit der ohne Bereitstellung mehrerer Eierausrichtungsstationen eine Vielzahl von Eierverpackungen befüllt werden können.

Diese Aufgabe wird durch eine Eierausrichtungsstation zur Ausrichtung von Eiern mit den Merkmalen des Anspruchs 1 sowie durch eine Vorrichtung mit den Merkmalen des Anspruchs 9 gelöst.

Die erfindungsgemäße Eierausrichtungsstation weist mehrere in Förderrichtung parallel zueinander angeordnete Laufbahnen und einen Übergabebereich zur Übergabe der Eier auf ein Förderband auf. Vor dem Übergabebereich ist eine Verstelleinrichtung angeordnet, mit der die Eier wahlweise mit dem Eiboden oder der Eispitze in Eiaufnahmen des ersten Förderbandes einsetzbar sind.

Die Verstelleinrichtung weist eine sich quer zu den Laufbahnen erstreckende und an einem Gehäuse der Eierausrichtungsstation schwenkbar befestigte Stange auf, an der in Förderrichtung ausgerichtete Wendeplatten angeordnet sind. Eine solche Querstange ist in einfacher und kostengünstiger Weise an einem Gehäuse der Eierausrichtungsstation anbringbar.

Vorteilhafte Ausführungsvarianten der Erfindung sind Gegenstand der Unteransprüche.

Nach einer bevorzugten Ausführungsvariante sind die Wendeplatten derart ausgerichtet, dass die an den Stirnkanten der Wendeplatten anstoßenden Eier sich bei der Weiterbewegung in Förderrichtung so drehen, dass die Eispitze in Förderrichtung nach vorn zeigen. Die Wendeplatten können dabei als einfach herstellbare plattenförmige Gebilde ausgebildet sein.

Die Verstelleinrichtung weist bevorzugt eine sich quer zu den Laufbahnen erstreckende und an einem Gehäuse der Eierausrichtungsstation schwenkbar befestigte Leiste mit daran befestigten Federelementen auf, die in die Förderstrecke der Eier einschwenkbar ist, wobei die Leiste in ihrer Funktionsstellung derart oberhalb der Laufbahnen gehalten ist, dass die Federelemente mit den Eiern in Eingriff gelangen. So ist in einfacher Weise ein Tausch der für die gewünschte Eiausrichtung benötigte Stange oder Leiste durch ein Herein- bzw. Herausschwenken ermöglicht.

Nach einer weiteren bevorzugten Ausführungsvariante sind die Federelemente als quer zu ihrer Längsachse federnd bewegliche Schraubenfedern ausgebildet. Solche Schraubenfedern sind dauerhaft und kostengünstig herstellbar. Die Federelemente sind in der Funktionsstellung der Leiste bevorzugt in einer Richtung quer zu den Laufbahnen derart positioniert, dass die Eier so angestoßen werden, dass sie sich mit dem Eiboden nach vorn in Förderrichtung ausrichten.

Im Übergabebereich sind nach einer weiteren Ausführungsvariante Förderrollen zur Weiterbeförderung der Eier angeordnet, wobei in Förderrichtung hinter den Förderrollen jeweils eine Rutsche angeordnet ist, auf denen das jeweilige Ei weiter nach unten in eine unterhalb des Übergabebereichs angeordnete Eiaufnahme eines ersten Förderbandes beförderbar ist.

Die Verstelleinrichtung ist dabei bevorzugt über einen Betätigungshebel betätigbar.

Die Vorrichtung zum Transport und Verpacken von Eiern in Eierverpackungen weist wenigstens eine Entstapelungsstation für leere Eierverpackungen auf, eine Eierausrichtungsstation, eine Umsetzstation zur Umsetzung der Eier von einem Förderband mit mehreren nebeneinander angeordneten Eiaufnahmen in eine Eierverpackung, eine Verpackungsschließstation und eine Ausgabestation. Dabei ist die Umsetzstation gemäß der oben beschriebenen Umsetzvorrichtung ausgebildet.

Nachfolgend wird eine bevorzugte Ausführungsvariante der Erfindung anhand der beiliegenden Zeichnungen näher erläutert. Es zeigen:
- Fig. 1: eine perspektivische Darstellung einer Ausführungsvariante einer erfindungsgemäßen Vorrichtung zum Transport und Verpacken von Eiern,
- Fig. 2: eine Detailansicht einer Eierausrichtungsstation,
- Fig. 3 und 4: in Fig. 2 mit III, IV bezeichnetes Detail der Eierausrichtungsstation in unterschiedlichen Ausrichtungsstellungen,
- Fig. 5: eine perspektivische Detailansicht einer Ausführungsvariante einer Umsetzvorrichtung,
- Fig. 6: eine Ansicht von unten auf die Umsetzvorrichtung gemäß Fig. 5,
- Fig. 7: eine perspektivische Detaildarstellung der Umsetzvorrichtung aus Fig. 5 in einer Sternanordnung der Saughebeelemente,
- Fig. 8: eine Ansicht von unten auf die Umsetzvorrichtung gem. Fig. 7,
- Fig. 9: eine perspektivische Detailansicht einer Verpackungsschließstation,
- Fig. 10: ein in Fig. 9 mit X bezeichneter Detailausschnitt der Verpackungsschließstation mit angehobener Führungsleiste dund

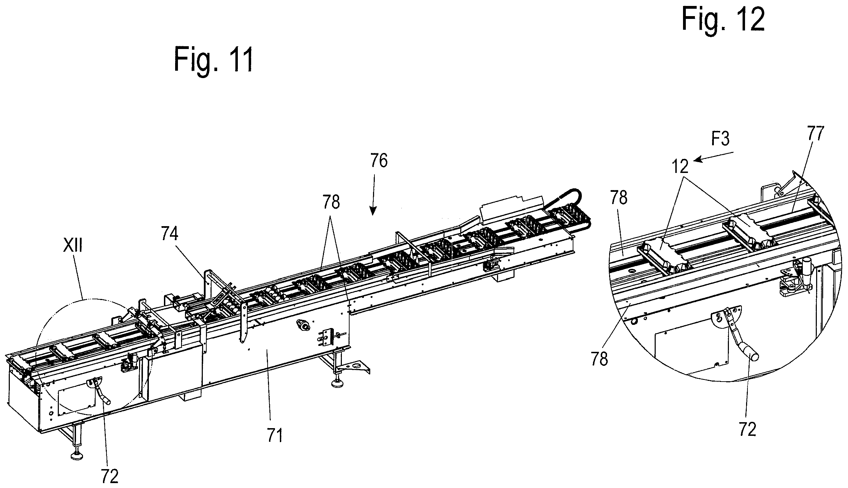

- Fig. 11 und 12: den Fig. 9 und 10 entsprechende Ansichten der Verpackungsschließstation mit abgesenkter Führungsleiste.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Umsetzvorrichtung, des Förderbandes, der Eierverpackung, der Eierausrichtungsstation, der Entstapelungsstation, der Verpackungsschließstation, der Saughebeelemente und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

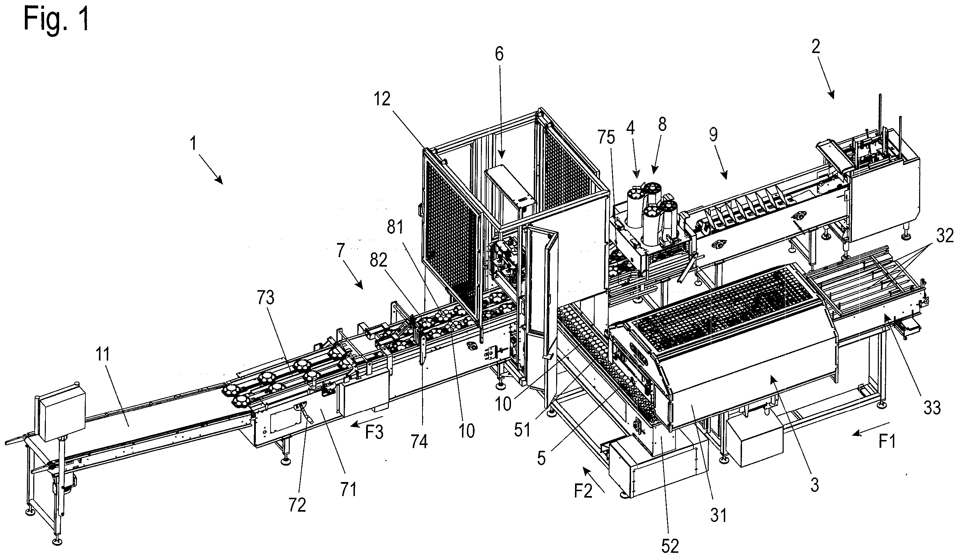

In Fig. 1 ist mit dem Bezugszeichen 1 insgesamt eine Ausführungsvariante einer erfindungsgemäßen Vorrichtung zum Transport und Verpacken von Eiern 10 in Eierverpackungen 8 bezeichnet.

Die Vorrichtung 1 weist eine Zuführstation für Eierverpackungen 8 auf, die hier in Gestalt zweier Entstapelungsstationen 2, 4 ausgebildet ist, die mit voneinander verschiedenen Eierverpackungen befüllbar sind.

So dient die Entstapelungsstation 2 zur Entstapelung von übereinander gestapelten zweireihigen, insbesondere 6er, 10er oder 12er-Eierverpackungen.

Die doppelreihigen Eierverpackungen werden dabei über ein Fächerband 9 auf ein zu einer Verpackungsschließstation 7 führendes Förderband 75 geleitet. Die Entpackungsstation 4 ist bei der hier gezeigten Ausführungsvariante so positioniert, dass die Eierverpackungen 8 direkt auf das Förderband 75 abgelegt werden.

Die zweite Entstapelungsvorrichtung 4 dient dabei zur Entstapelung von aufeinander gestapelten Sternverpackungen für Eier, wobei jede dieser Verpackungen 8 vorzugsweise zur Aufnahme von sechs Eiern 10 ausgebildet ist.

Parallel zu dem Strang der Eierverpackungszuführung ist eine Zuführstation für die zu verpackenden Eier 10 angeordnet. Die Eier 10 werden dazu auf eine Förderstrecke 33 mit mehreren parallel zueinander verlaufenden Laufbahnen 32 einer Eierausrichtungsstation 3 in einer Förderrichtung F₁ geführt.

Von dieser Eierausrichtungsstation 3 werden die Eier 10 wahlweise mit dem Eiboden 101 oder der Eispitze 102 in Eieraufnahmen 51 eines ersten Förderbandes 5 eingesetzt.

Dieses erste Förderband 5 dient zur Beförderung der Eier von der Eierausrichtungsstation 3 in einer Förderrichtung F₂ zu einer Umsetzvorrichtung 6, die der Umsetzung der Eier 10 von dem Förderband 5 in die Eierverpackungen 8 dient.

Die mit Eiern 10 befüllten Eierverpackungen 8 werden anschließend durch eine Verpackungsschließstation 7 weiter befördert, in der die Eierverpackungen 8 aus einer geöffneten Beladestellung, bei der ein Verpackungsdeckel 82 in Förderrichtung F₃ aufgeklappt vor einem Verpackungsboden 81 der Eierverpackungen 8 auf dem Transportband 75 positioniert ist, durch Umklappen des Verpackungsdeckels 82 auf den jeweiligen Verpackungsboden 81 verschlossen.

Im Anschluss daran wird die so mit Eiern 10 befüllte Eierverpackung 8 weiter zu einer Ausgabestation 11 befördert.

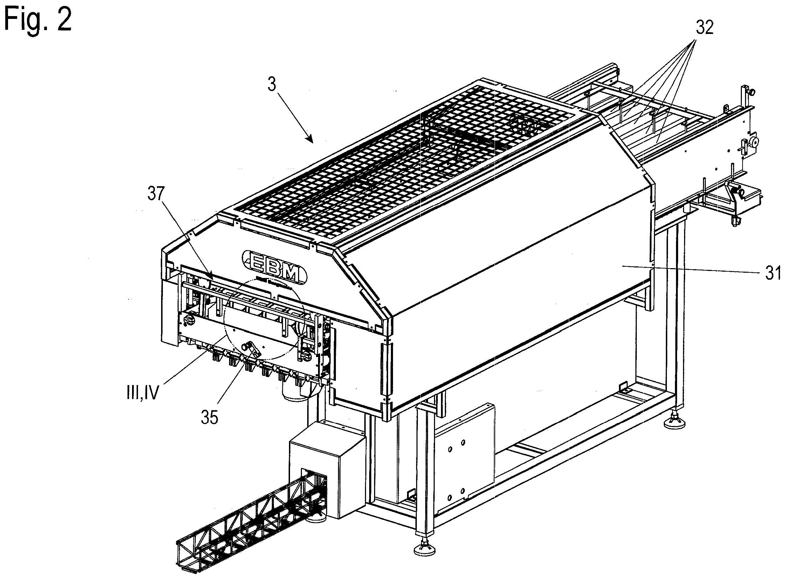

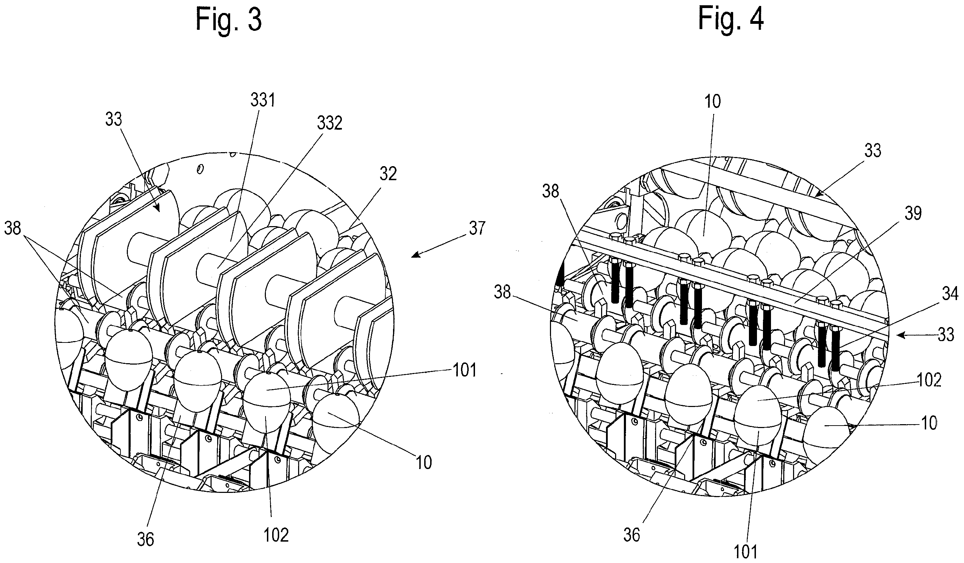

Details der Eierausrichtungsstation 3 sind in den Figuren 2 bis 4 dargestellt. Eine solche Eierausrichtungsstation 3 wird auch als Hubtaschenpacker bezeichnet.

Wie in den Figuren 2 bis 4 gezeigt ist, werden die Eier 10 nach dem Auflegen auf die Laufbahnen 32 auf der Seite liegend rollend in Richtung eines Übergabebereichs 37 geführt.

In diesem Übergabebereich 37 ist eine Verstelleinrichtung 33 angeordnet, mit der die Eier 10 wahlweise mit dem Eiboden 101 oder der Eispitze 102 in jeweilige Eiaufnahmen 51 des ersten Förderbandes 5 einsetzbar sind.

Die Verstelleinrichtung 33 weist eine sich quer zu den Längsbahnen 32 erstreckende und an einem Gehäuse 31 der Eierausrichtungsstation 3 schwenkbar befestigte Stange 332 auf, an der in Förderrichtung F ausgerichtete Wendeplatten 331 angeordnet sind.

Die Wendeplatten 331 sind dabei so ausgerichtet, dass die an den Stirnkanten dieser Wendeplatten 331 anstoßenden Eier 10 sich bei der Weiterbewegung in Förderrichtung F so drehen, dass die Eispitze 102 in Förderrichtung F nach vorn zeigt.

Der Abstand der einer der Laufbahnen 32 zugeordneten Wendeplatten 331 zueinander ist dabei so bemessen, dass zwischen zwei benachbarten Wendeplatten 331 ein Kanal gebildet wird, der kleiner ist als die Längserstreckung der Eier 10, aber größer als die Dicke der Eier 10.

Die Eier 10 werden dabei auf Förderrollen 38 in Förderrichtung F weiterbefördert, bis sie über eine Rutsche 36 nach unten in die unterhalb des Übergabebereichs 37 angeordneten Eiaufnahmen 51 des ersten Förderbandes 5, in diesem Fall mit der Eispitze 102 nach unten hineinfallen.

Sollen die Eier 10 mit ihrer Eispitze 102 nach oben in die Eiaufnahmen 51 des Förderbandes 5 eingesetzt werden, wird die Verstelleinrichtung 33 umgestellt, und zwar in der Art, dass die Wendeplatten 331 außer Eingriff mit den Eiern 10 genommen werden und stattdessen eine Leiste 39 mit sich in Richtung der Eier 10 erstreckenden Federelementen 34 in die Förderstrecke der Eier 10 angeordnet, insbesondere eingeschwenkt wird. Diese bevorzugt als sich von der Leiste 39 in Richtung der Transportrollen 38 erstreckenden, als Schraubenfedern ausgebildeten Federelementen 34 sind dabei in eine Richtung quer zu den Laufbahnen 32 der Eierausrichtungsstation 3 derart positioniert, dass die Eier 10 beim Weitertransport über die Laufrollen 38 so angestoßen werden, dass sie sich mit dem Eiboden 101 nach vorn in Förderrichtung ausrichten und dadurch mit dem Eiboden 101 nach unten über die Rutsche 36 in die Eiaufnahmen 51 des Förderbands 5 fallen.

Die Betätigung der Verstelleinrichtung erfolgt dabei vorzugsweise über einen Betätigungshebel 35. Der Betätigungshebel ist dabei derart mit der Leiste 39 und der Stange 332 gekoppelt, dass durch Betätigen, insbesondere Verschwenken des relativ zum Gehäuse 31 der Eierausrichtungsstation 3 bewegbaren Betätigungshebels 35 die Stange 332 mit den Wendeplatten 331 in den Förderbereich der Eier 10 eingeschwenkt und die Leiste 39 gleichzeitig aus dem Förderbereich der Eier 10 heraus geschwenkt wird bzw. bei Betätigung des Betätigungshebel 35 in entgegengesetzter Richtung die Stange 332 mit den Wendeplatten 331 aus dem Förderbereich der Eier 10 heraus geschwenkt und die Leiste 39 gleichzeitig in den Förderbereich der Eier 10 eingeschwenkt wird.

Denkbar ist auch eine elektromotorisch angesteuerte Verstellung.

Das erste Förderband 5 weist, wie in Fig. 1 gezeigt, mehrere parallel angeordnete Reihen von Eiaufnahmen 51 auf. Die Förderrichtung F₂ der Eier 10 auf dem Förderband 5 ist dabei bevorzugt senkrecht zur Förderrichtung F₁ der Eier 10 entlang der Eierausrichtungsstation 3. Das Förderband 5 befördert die Eier 10 dabei zu der Umsetzvorrichtung 6.

Das Förderband 5 ist dabei bevorzugt derart gelagert, dass es in Förderrichtung F₁ unter dem Übergabebereich 37 der Eierausrichtungsstation 3 verschiebbar ist, um die parallel angeordneten Reihen von Eiaufnahmen 51 befüllen zu können.

Das Förderband 5 besteht dabei vorzugsweise aus einem umlaufenden Endlosband, auf dem die Eiablagen 51 befestigt sind.

In der Umsetzvorrichtung 6 werden die Eier 10 mithilfe von Saughebeelementen 63 von den Eiaufnahmen 51 saugend abgehoben und in die Eierverpackungen 8 eingesetzt, die auf einem unterhalb der Umsetzvorrichtung 6 durchlaufenden Fördereinrichtung in Richtung der Ausgabestation transportiert werden.

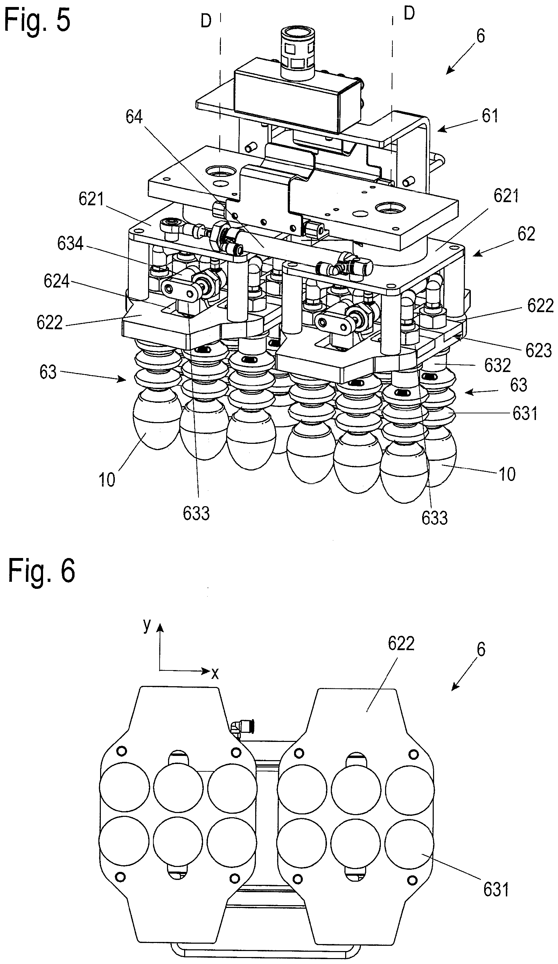

Die Umsetzvorrichtung 6, die zum Schutz bevorzugt mit Gitterwandungen 12 umgeben ist, weist im Wesentlichen ein vertikal bewegbares und horizontal verschiebbares oder verschwenkbares Gestell 61 auf, gezeigt in den Figuren 5 bis 8, mit wenigstens einer Montageplatte 622 eines Montageelements 62, an der mehrere an einer Saugeinrichtung, wie beispielsweise einer Vakuumpumpe, anschließbare Saughebeelemente 63 montiert sind.

Diese Saughebeelemente 63 sind dabei in der Ebene der Montageplatte 622 motorisch oder hydraulisch verschiebbar zwischen einer Ansaugstellung und einer Abgabestellung an der Montageplatte 622 montiert.

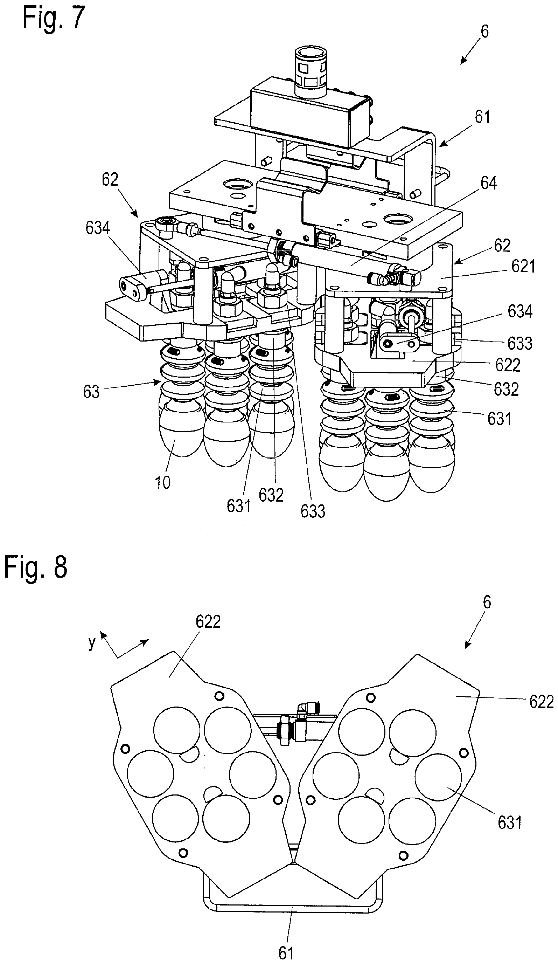

Wie in den Figuren 5 und 7 sowie in der Zusammenschau der Figuren 5 bis 8 dargestellt ist, sind an der Montageplatte 622 bevorzugt sechs Saughebeelemente 63 montiert.

Zwei dieser Saughebeelemente 63 sind dabei linear in einer ersten Verschieberichtung x und die vier anderen der Saughebeelemente 63 in einer zweiten Verschieberichtung y, bevorzugt senkrecht zur Verschieberichtung x, bewegbar.

Dies ermöglicht, die in parallelen Reihen angeordneten Eier 10 auf den Eiaufnahmen 51 des ersten Förderbandes 5 durch Aufsetzen der Saughebeelemente 63 auf die Eier 10 anzusaugen, das Gestell 61 sodann zur Abgabestellung zu verfahren und anschließend durch Abschalten oder Unterbrechen der Ansaugung in die jeweilige Eierverpackung 8 abzusetzen.

Sind die Eierverpackungen 8 als doppelreihige Eierverpackungen ausgebildet, können die Saughebeelemente 63 in der Ansaugstellung verbleiben, da die Eier 10 in diesem Fall, wie in Fig. 6 beispielsweise dargestellt, nach wie vor in zweireihiger Anordnung von den Saughebeelementen 63 gehalten sind.

Sollen die Eier 10 in einer Sternanordnung in sogenannten Sternverpackungen für Eier 10 verpackt werden, werden die Saughebeelemente 63 entsprechend in die in den Figuren 7 und 8 gezeigte Position verfahren, so dass die Eier 10 vor der Bestückung der Eierverpackung 8 in einer der Sternverpackung entsprechenden Sternanordnung angeordnet sind.

Wie in den Figuren 5 bis 8 des Weiteren gezeigt, sind an dem Gestell 61 bevorzugt zwei solcher Montageelemente 62 nebeneinander montiert, wodurch die Kapazität dieser Umsetzvorrichtung 6 erhöht wird.

Jedes der Saughebeelemente 63 weist bevorzugt einen Saugnapf 631 auf, ein in ein oberes Ende des Saugnapfes 631 mündendes Schlauch- oder Rohrstück 632, das über ein Rohr oder einen Schlauch mit der Saugeinrichtung verbunden ist, und ein mit einer Verstellmechanik 634 verbundenes Führungsteil 633. Die Führungsteile 633 sind dabei in Führungsausnehmungen 623, 624 der Montageplatte 622 verschiebbar geführt.

Wie in Fig. 7 des Weiteren gezeigt ist, sind die Montageelemente 62 um eine senkrecht zu den Montageelementen 62 ausgerichtete Drehachse D verschwenkbar. Denkbar ist auch nur eines der Montageelemente 62 um eine solche Drehachse D verschwenkbar am Gestell 61 anzuordnen.

Nachdem die Eier 10 in jeweilige Böden 81 von Eierverpackungen 8 eingesetzt sind, werden die mit Eiern 10 befüllten Eierverpackungen 8 weiter zu einer Verpackungsschließstation 7 gefördert, in der die in Förderrichtung F₃ sich vor den Verpackungsböden 81 angeordneten Verpackungsdeckel 82 durch Umklappen auf die Verpackungsböden 81 verschlossen werden und weiter zu einer Ausgabestation 11 gefördert werden.

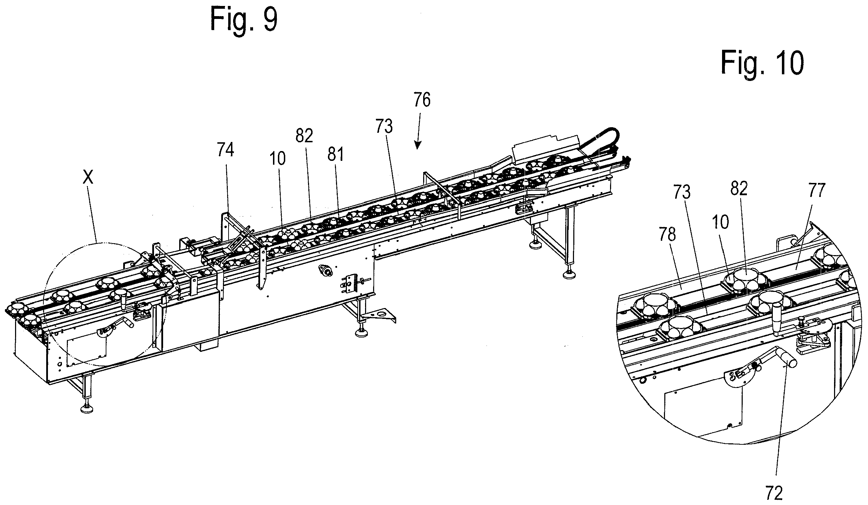

Die Verpackungsschließstation 7 weist zur verbesserten Führung der Eierverpackungen 8 eine aus einem Boden des Förderbandes sich in Förderrichtung F₃ erstreckende anhebbare bzw. absenkbare Führungsleiste 76 auf, die der Führung von Sternverpackungen oder auch von doppelreihigen Sechserverpackungen dient, wie in den Figuren 9 und 10 gezeigt ist.

Diese Sternverpackungen oder doppelreihigen Sechserverpackungen sind nur etwa halb so breit wie ebenfalls in der Vorrichtung zum Transport und Verpacken von Eiern 10 einsetzbaren doppelreihigen Zwölferverpackungen nutzbar.

Die Zwölfer-Eierverpackungen werden bevorzugt ebenfalls quer zur Förderrichtung F₃ auf dem Förderband 75 befördert. Dabei wird die Führungsleiste 76 in den Boden 77 der Verpackungsschließstation 7 eingefahren, so dass diese Eierverpackungen 12 durch randseitige Leisten 78 geführt werden.

Die in der Mitte des Bodens 77 anhebbare bzw. absenkbare Führungsleiste 76 wird dabei in der hier gezeigten Ausführungsvariante mithilfe eines Handhebels 72 angehoben bzw. abgesenkt. Denkbar ist auch eine elektromotorische Ansteuerung dieser Leiste 76.

### Bezugszeichenliste

- 1: Vorrichtung
- 2: Entstapelungsstation

- 3: Eierausrichtungsstation
- 31: Gehäuse
- 32: Laufbahn
- 33: Verstelleinrichtung
- 331: Wendeplatte
- 332: Querstange
- 34: Federelement
- 35: Handhebel
- 36: Rutsche
- 37: Übergabebereich
- 38: Laufrolle
- 39: Leiste

- 4: Entstapelungsstation

- 5: Förderband
- 51: Eiaufnahme
- 52: Bandgehäuse

- 6: Umsetzeinrichtung
- 61: Gestell
- 62: Montageelement
- 621: Deckplatte
- 622: Montageplatte
- 623: Führungsausnehmung
- 624: Führungsausnehmung
- 63: Saughebeelement
- 631: Saugnapf
- 632: Schlauch- oder Rohrstück
- 633: Führungsteil
- 634: Verstellmechanik

- 7: Verpackungsschließstation
- 71: Bandgehäuse
- 72: Handhebel
- 73: Führungsleiste
- 74: Umklappgestänge
- 75: Förderband
- 76: Einsetzbereich
- 77: Boden
- 78: Führungsleiste

- 8: Eierverpackung
- 81: Boden
- 82: Deckel

- 9: Fächerband
- 10: Ei
- 11: Ausgabestation
- 12: Eierverpackung

- x: Verfahrrichtung
- y: Verfahrrichtung

- F₁: Förderrichtung
- F₂: Förderrichtung
- F₃: Förderrichtung

## Patentansprüche

1. Eierausrichtungsstation (3) für eine Vorrichtung zum Transport und Verpacken von Eiern (10) in Eierverpackungen (8, 12), aufweisend mehrere in Förderrichtung (F1) parallel zueinander angeordnete Laufbahnen (32) und einen Übergabebereich (37) zur Übergabe der Eier (10) auf ein Förderband (5), wobei vor dem Übergabebereich (37) eine Verstelleinrichtung (33) angeordnet ist, mit der die Eier (10) wahlweise mit dem Eiboden (101) oder der Eispitze (102) in Eiaufnahmen (51) des ersten Förderbandes (5) einsetzbar sind, **dadurch gekennzeichnet, dass** die Verstelleinrichtung (33) eine sich quer zu den Laufbahnen (32) erstreckende und an einem Gehäuse (31) der Eierausrichtungsstation (3) schwenkbar befestigte Stange (332) aufweist, an der in Förderrichtung (F₁) ausgerichtete Wendeplatten (331) angeordnet sind.

2. Eierausrichtungsstation nach Anspruch 1, **dadurch gekennzeichnet, dass** die Wendeplatten (331) derart ausgerichtet sind, dass die an den Stirnkanten der Wendeplatten (331) anstoßenden Eier (10) sich bei der Weiterbewegung in Förderrichtung (F₁) so drehen, dass die Eispitzen (102) in Förderrichtung (F₁) nach vorn zeigen.

3. Eierausrichtungsstation nach Anspruch 1 oder 2, **dadurch gekennzeichnet, dass** der Abstand der jeweils einer der Laufbahnen (32) zugeordneten Wendeplatten (331) zueinander derart bemessen ist, dass zwischen zwei benachbarten Wendeplatten (331) ein Kanal gebildet wird, der kleiner ist als die Längserstreckung der Eier (10), aber größer als die Dicke der Eier (10).

4. Eierausrichtungsstation nach einem der vorstehenden Ansprüche,
**dadurch gekennzeichnet, dass** die Verstelleinrichtung (33) eine sich quer zu den Laufbahnen (32) erstreckende und an einem Gehäuse (31) der Eierausrichtungsstation (3) schwenkbar befestigte Leiste (39) mit daran befestigten Federelementen (34) aufweist, die in die Förderstrecke der Eier (10) einschwenkbar ist, wobei die Leiste in ihrer Funktionsstellung derart oberhalb der Laufbahnen (32) gehalten ist, dass die Federelemente (34) mit den Eiern (10) in Eingriff gelangen.

5. Eierausrichtungsstation nach Anspruch 4, **dadurch gekennzeichnet, dass** die Federelementen (34) als quer zu ihrer Längsachse federnd bewegliche Schraubenfedern ausgebildet sind.

6. Eierausrichtungsstation nach Anspruch 4 oder 5, **dadurch gekennzeichnet, dass** die Federelemente (34) in der Funktionsstellung der Leiste (39) in einer Richtung quer zu den Laufbahnen (32) derart positioniert sind, dass die Eier (10) so angestoßen werden, dass sie sich mit dem Eiboden (101) nach vorn in Förderrichtung (F₁) ausrichten.

7. Eierausrichtungsstation nach einem der vorstehenden Ansprüche,
**dadurch gekennzeichnet, dass** im Übergabebereich (37) Förderrollen (38) zur Weiterbeförderung der Eier (10) angeordnet sind, wobei in Förderrichtung (F₁) hinter den Förderrollen (38) jeweils eine Rutsche (36) angeordnet ist, auf denen das jeweilige Ei (10) weiter nach unten in eine unterhalb des Übergabebereichs (37) angeordnete Eiaufnahme (51) eines ersten Förderbandes (5) beförderbar ist.

8. Eierausrichtungsstation nach einem der vorstehenden Ansprüche,
**dadurch gekennzeichnet, dass** die Verstelleinrichtung (33) über einen Betätigungshebel (35) betätigbar ist.

9. Vorrichtung zum Transport und Verpacken von Eiern (10) in Eierverpackungen (8), aufweisend wenigstens eine Entstapelungsstation (2, 4) für leere Eierverpackungen (8), eine Eierausrichtungsstation (3) zur Ausrichtung und Platzierung von entlang einer ersten Förderstrecke (32) geführten Eiern (10) in Eiaufnahmen (51) eines ersten Förderbandes (5), eine Umsetzstation (6) zur Umsetzung der Eier (10) von dem ersten Förderband (5) in eine Eierverpackung (8), eine Verpackungsschließstation (7) und eine Ausgabestation (11), **dadurch gekennzeichnet, dass** die Eierausrichtungsstation (3) gemäß einem der vorstehenden Ansprüche ausgebildet ist.

## Claims

1. An egg-orienting station (3) for an apparatus for transporting eggs (10) and packaging them in egg packs (8, 12), having a plurality of tracks (32), which are arranged parallel to one another in the conveying direction (F₁), and a transfer region (37) for transferring the eggs (10) to a conveyor belt (5), whereby an adjustment device (33) is arranged upstream from the transfer region (37), with which adjustment device (33) the eggs (10) can be placed either with the egg bottom (101) or the egg top (102) into egg holders (51) of the first conveyor belt (5), **characterized in that** the adjustment device (33) has a rod (332) which extends transversely with respect to the tracks (32) and which is secured pivotably on a housing (31) of the egg-orienting station (3), and indexing plates (331) oriented in the conveying direction (F₁) are arranged on the rod (332).

2. The egg-orienting station as claimed in claim 1, **characterized in that** the indexing plates (331) are oriented in such a way that the eggs (10) abutting the end edges of the indexing plates (331) rotate during the onward movement in the conveying direction (F₁), such that the egg tops (102) face forward in the conveying direction (F₁).

3. The egg-orienting station as claimed in claim 1 or 2, **characterized in that** the mutual spacing of the indexing plates (331) assigned to one of the tracks (32) is dimensioned in such a way that, between two adjacent indexing plates (331), a channel is formed which is smaller than the longitudinal extent of the eggs (10) but greater than the thickness of the eggs (10).

4. The egg-orienting station as claimed in one of the preceding claims, **characterized in that** the adjustment device (33) has a rail (39) which extends transversely with respect to the tracks (32) and which is secured pivotably on a housing (31) of the egg-orienting station (3) and has spring elements (34) secured thereon, which rail (39) is pivotable into the conveying path of the eggs (10), wherein the rail in its functional position is held above the tracks (32) in such a way that the spring elements (34) come into engagement with the eggs (10).

5. The egg-orienting station as claimed in claim 4, **characterized in that** the spring elements (34) are designed as helical springs which are resiliently movable transversely with respect to their longitudinal axis.

6. The egg-orienting station as claimed in claim 4 or 5, **characterized in that** the spring elements (34), in the functional position of the rail (39), are positioned in a direction transverse to the tracks (32) in such a way that the eggs (10) are abutted so that they orient themselves with the egg bottom (101) toward the front in the conveying direction (F₁) .

7. The egg-orienting station as claimed in one of the preceding claims, **characterized in that** conveying rollers (38) for conveying the eggs (10) onward are arranged in the transfer region (37), wherein a chute (36) is arranged downstream from each of the conveying rollers (38) in the conveying direction (F₁), on which chutes the respective egg (10) can be conveyed farther down into an egg holder (51) of a first conveyor belt (5) arranged underneath the transfer region (37).

8. The egg-orienting station as claimed in one of the preceding claims, **characterized in that** the adjustment device (33) is activatable via an actuation lever (35).

9. An apparatus for transporting eggs (10) and packaging them in egg packs (8), having at least one unstacking station (2, 4) for empty egg packs (8), an egg-orienting station (3) by which eggs (10) guided along a first conveying path (32) are oriented and placed in egg holders (51) of a first conveyor belt (5), a relocation station (6) for relocating the eggs (10) from the first conveyor belt (5) into an egg pack (8), a pack-closing station (7) and an output station (11), **characterized in that** the egg-orienting station (3) is designed as claimed in one of the preceding claims.

## Revendications

1. Poste d'orientation d'œufs (3) pour un dispositif pour le transport d'œufs (10) et leur emballage dans des emballages à œufs (8, 12), présentant plusieurs pistes (32) disposées parallèlement les unes aux autres dans un sens de transport (F₁) et une zone de transfert (37) pour le transfert des œufs (10) sur une bande transporteuse (5), dans lequel un dispositif de déplacement (33) est disposé avant la zone de transfert (37), par lequel les œufs (10) peuvent être insérés au choix par leur gros bout (101) ou leur petit bout (102) dans des réceptacles à œufs (51) de la première bande transporteuse (5), **caractérisé en ce que** le dispositif de déplacement (33) présente une tringle (332) qui s'étend transversalement par rapport aux pistes (32) et qui est fixée de façon pivotante sur un coffre (31) du poste d'orientation des œufs (3), sur laquelle sont disposées des plaques de retournement (331) orientées dans le sens de transport (F₁).

2. Poste d'orientation d'œufs selon la revendication 1, **caractérisé en ce que** les plaques de retournement (331) sont orientées de telle façon que les œufs (10) qui touchent les faces frontales des plaques de retournement (331) se retournent en continuant leur mouvement dans le sens de transport (F₁) de telle manière que leur petit bout (102) soit tourné vers l'avant dans le sens de transport (F₁).

3. Poste d'orientation d'œufs selon la revendication 1 ou 2, **caractérisé en ce que** la distance entre les plaques de retournement (331) associées à chacune des pistes (32) est dimensionnée de façon à former entre deux plaques de retournement (331) voisines un canal plus petit que la longueur des œufs (10) mais plus grand que l'épaisseur des œufs (10).

4. Poste d'orientation d'œufs selon l'une des revendications précédentes, **caractérisé en ce que** le dispositif d'orientation (33) comprend un barreau (39) qui s'étend transversalement par rapport aux pistes (32) sur lequel sont fixés des éléments formant ressort (34), qui est fixé de façon pivotante sur un coffre (31) du poste d'orientation d'œufs (3) et peut pivoter pour se placer sur le trajet de transport des œufs (10), le barreau dans sa position de fonctionnement étant retenu au-dessus des pistes (32) de telle manière que les éléments formant ressort (34) se mettent en prise avec les œufs (10).

5. Poste d'orientation d'œufs selon la revendication 4, **caractérisé en ce que** les éléments formant ressort (34) sont conformés comme des ressorts hélicoïdaux mobiles de façon élastique transversalement par rapport à leur axe longitudinal.

6. Poste d'orientation d'œufs selon la revendication 4 ou 5, **caractérisé en ce que** les éléments formant ressort (34) sont positionnés, dans la position de fonctionnement du barreau (39), dans une direction transversale par rapport aux pistes (32), de telle sorte qu'ils touchent les œufs (10) de façon à les orienter avec le gros bout (101) vers l'avant dans le sens de transport (F₁).

7. Poste d'orientation d'œufs selon l'une des revendications précédentes, **caractérisé en ce que** sont disposés dans la zone de transfert (37) des rouleaux de transport (38) pour continuer le transport des œufs (10), une glissière (36) étant disposée dans le sens de transport (F₁) après chacun des rouleaux de transport (38), sur laquelle l'œuf (10) correspondant peut continuer à être déplacé vers le bas dans un réceptacle à œuf (51) d'une première bande transporteuse (5) disposé en dessous de la zone de transfert (37).

8. Poste d'orientation d'œufs selon l'une des revendications précédentes, **caractérisé en ce que** le dispositif de déplacement (33) peut être actionné par un levier d'actionnement (35).

9. Dispositif pour le transport d'œufs et leur emballage dans des emballages à œufs (8), présentant au moins un poste de dépilage (2, 4) pour les emballages à œufs (8) vides, un poste d'orientation d'œufs (3) pour l'orientation des œufs (10) guidés le long d'un premier trajet de transport (32) et leur placement dans des réceptacles à œuf (51) d'une première bande transporteuse (5), un poste de transbordement (6) pour le transbordement des œufs (10) de la première bande transporteuse (5) à un emballage à œufs (8), un poste de fermeture des emballages (7) et un poste de sortie (11), **caractérisé en ce que** le poste d'orientation des œufs (3) est conçu selon l'une des revendications précédentes.
